# EUROPEAN PATENT APPLICATION

(11) **EP 2 123 501 A1**
(43) Date of publication of application: **25.11.2009**
(21) Application number: 08156585.5
(22) Date of filing: 20.05.2008
(51) Int. Cl.: B60N 2/02, B60N 2/16, B60N 2/18, B60N 2/22

(54) **A seat adjuster**

(71) Applicant: Autoliv Development AB, 447 83 Vårgårda (SE)
(72) Inventor: Johanson, Mats Bo Ivar, 13 51393, Fristad (SE); Ahs, Jonny, 401 46593, Nossebro (SE)
(74) Representative: Beattie, Alex Thomas Stewart

(57) **Abstract**

An adjustment arrangement for adjusting the position of a vehicle seat, comprising: a fixed element (2,3), which is fixed in position relative to the floor of the vehicle; a moveable element (4,5) for connection to the underside of the vehicle seat, the moveable element being connected to the fixed element such that the distance of the moveable element from the fixed element may vary; a threaded shaft (11) attached to one of the moveable element and the fixed element, extending away therefrom; a nut (15,16) threaded onto the threaded shaft; a connecting arm (24) having a fixed length, connected at one end to the nut, and at the other end to the other one of the fixed element and the moveable element; and the arrangement being such that rotation of the shaft causes the nut to travel along the shaft towards or away from the one of the moveable element and the fixed element, thus causing the moveable element to be driven away from or towards the fixed element, and adjusting the height of the seat above the floor of the vehicle.

## Description

### Description of Invention

THE PRESENT INVENTION relates to a seat adjuster, and in particular concerns an arrangement for raising or lowering a seat of a motor vehicle.

Most modern motor vehicles are equipped with a mechanism for raising or lowering at least one of the vehicles seats. This is particularly important, for example, to accommodate drivers of varying heights, so that (within a reasonable range) any driver can comfortably reach the pedals of the vehicle, and can also see over the dashboard of the vehicle to view the road ahead.

It is an object of the present invention to provide an improved seat adjuster.

Accordingly, one aspect of the present invention provides an adjustment arrangement for adjusting the position of a vehicle seat, comprising: a fixed element, which is fixed in position relative to the floor of the vehicle; a moveable element for connection to the underside of the vehicle seat, the moveable element being connected to the fixed element such that the distance of the moveable element from the fixed element may vary; a threaded shaft attached to one of the moveable element and the fixed element, extending away therefrom; a nut threaded onto the threaded shaft; a connecting arm having a substantially fixed length, connected at one end to the nut, and at the other end to the other one of the fixed element and the moveable element; and the arrangement being such that relation rotation of the nut and shaft causes the nut to travel along the shaft towards or away from the one of the moveable element and the fixed element, thus causing the moveable element to be driven away from or towards the fixed element, and adjusting the height of the seat above the floor of the vehicle.

Advantageously, the threaded shaft is attached to the moveable element.

Preferably, the threaded shaft is attached to the moveable element or to the fixed element at substantially right-angles thereto.

Conveniently, the moveable element is attached to the fixed element by means of a pair of link arms, each of which is pivotally attached both to the moveable element and to the fixed element, such that the moveable element may move along a substantially arcuate path with respect to the fixed element.

Alternatively, the moveable element may move substantially directly away from or towards the fixed element.

Advantageously, the nut has at least one fixing tab extending away from an outer surface thereof, and wherein a guide pipe is positioned around the threaded shaft, the guide pipe having an elongate slot formed therein to receive the fixing tab, such that the fixing tab may move along the threaded shaft but may not rotate with respect to the guide pipe.

Preferably, the connecting arm is pivotally attached to the nut.

Conveniently, the connecting arm is pivotally attached to the nut by way of a bracket which is attached to the nut and which extends substantially around the threaded shaft.

Advantageously, the connecting arm is pivotally attached to the other one of the fixed element and the moveable element.

Preferably, a pair of fixed elements are provided in spaced apart relation, with a corresponding pair of moveable elements being provided, and wherein the threaded shaft extends between the pair of moveable element or between the pair of fixed elements.

Conveniently, the threaded shaft comprises two threaded portions, one on either side thereof, the threaded portions being threaded in opposite directions to one another, with one nut being threaded onto each of the threaded portions, and a corresponding connecting arm being provided between each nut and the corresponding other one of the moveable element and fixed element.

Advantageously, a manual control is provided to allow a user to impart rotational motion to the threaded shaft.

Preferably, a motor is provided to impart rotational motion to the threaded shaft.

Conveniently, a further pipe or shaft is provided substantially coaxially with the threaded shaft, a drive connector is attached to a drive shaft which may be driven rotationally, and a selection arrangement is provided to allow a user to drive one of the threaded shaft and the further shaft or pipe, selectively, into engagement with the drive connector, so that rotational movement of the drive shaft will impart rotational motions only to the selected one of the threaded shaft and the further shaft or pipe.

Advantageously, the selection arrangement is provided at or near the far end of the threaded shaft from the end which may engage the drive connector.

Preferably, the further shaft or pipe is provided within the threaded shaft.

Conveniently, the further shaft or pipe is provided around the threaded shaft.

Advantageously, the drive connector comprises a first connection face having a first connection arrangement on a connection surface thereof, and wherein at least one of the threaded shaft or the further shaft or pipe is provided with a corresponding second connection face having a second connection arrangement thereon to engage with the first connection arrangement and thus transmit rotational motion between the drive connector and the threaded shaft or the further shaft or pipe.

Preferably, one of the first and second connection arrangements comprises one or more projections, and the other of the first and second connection arrangements comprises one or more recesses or notches.

Conveniently, one of the threaded shaft and the further shaft or pipe is biased into connection with the drive connector in a default mode, and wherein the other one of the threaded shaft and the further pipe or shaft may be driven towards the drive connector and engage with the drive connector, thus deflecting the drive connector away from its default position, such that the drive connector is moved out of engagement with the one of the threaded shaft or the further shaft or pipe.

Advantageously, the drive connector is biased into the default position.

Preferably, a third shaft or pipe is provided substantially coaxially with the threaded shaft.

Another aspect of the present invention provides an arrangement for adjusting two or more properties of a vehicle seat, comprising: first and second shafts or pipes provided substantially coaxially with one another; a drive connector, connected to a drive shaft which is adapted to be driven rotationally; and a selection arrangement allowing one of the first or second shafts or pipes, selectively, to engage the drive connector, so that rotation of the drive shaft causes corresponding rotation of the one of the first and second shafts or pipes, wherein rotation of the first shaft or pipe adjusts a first property of the vehicle seat, and wherein rotation of the second shaft or pipe adjusts a second property of the vehicle seat.

Conveniently, one of the first or second shafts or pipes is biased into connection with the drive connector in a default mode, and wherein the other one of the first or second shaft or pipes may be driven towards the drive connector and engaged with the drive connector, thus deflecting the drive connector away from this default position, such that the drive connector is moved out of engagement with the one of the first or second shafts or pipes.

Advantageously, the drive connector is biased into the default position.

Preferably, at least a third shaft or pipe is provided, which may be selectively engaged with the drive connector.

Conveniently, one of the shafts or pipes allows the adjustment of the height of the vehicle seat.

Advantageously, one of the shafts or pipes allows adjustment of the angle of a backrest of the seat.

Preferably, one of the shafts or pipes allows an angle of tilt of the squab of the seat to be adjusted.

In order that the present invention may be more readily understood, embodiments thereof will now be described, by way of example, with reference to the accompanying figures, in which:
Figure 1 shows components of a seat adjustment embodying the present invention;
Figure 2 shows an adjustment member for use with the present invention;
Figure 3 shows a nut for use with the present invention;

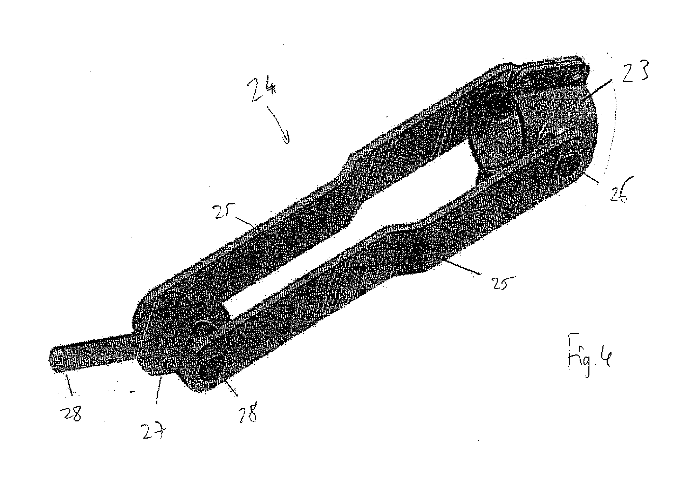

Figure 4 shows a connection arm for use with the present invention;
Figures 5 and 6 show details of further components of an adjuster embodying the present invention;
Figure 7 shows a selection arrangement for use with the present invention;
Figures 8 and 9 show details of a connection between the adjustment member and a drive shaft;
Figure 10 shows further details of the selection arrangement;
Figure 11 shows a connection of a recliner bar with the drive shaft;
Figure 12 shows further details of the selection arrangement;
Figures 13, 14 and 15 show details of the connection between the selection arrangement and a tilt pipe;
Figures 16 and 17 show details of the connection between the tilt pipe and the drive shaft; and
Figure 18 shows a tilt arrangement for use with the present invention.

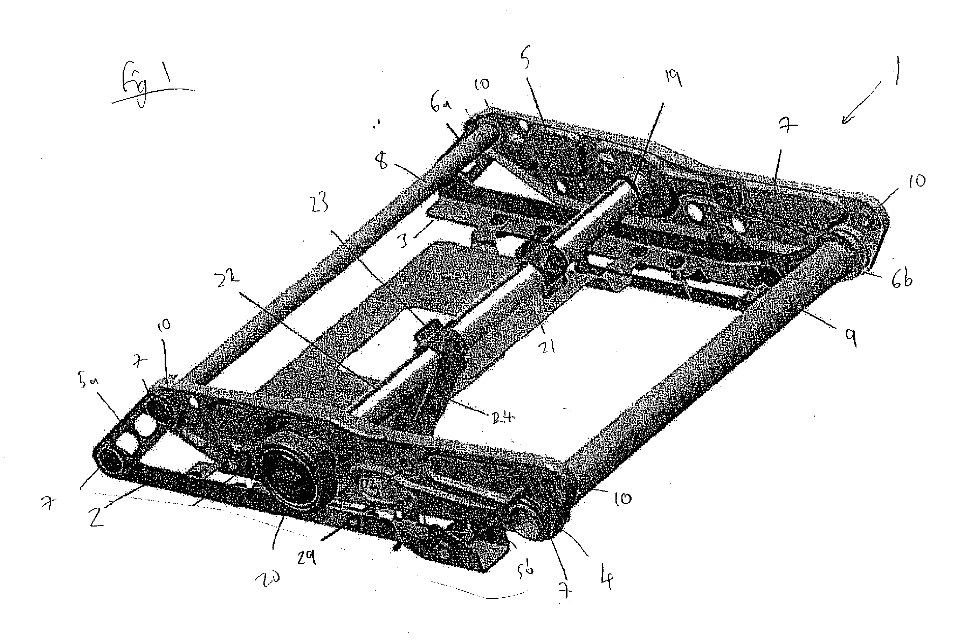

Referring firstly to figure 1, a seat adjuster 1 for a vehicle seat is shown, according to a first embodiment. Left and right rails 2,3 are provided in fixed parallel relation to one another, the space between the rails 2,3 being approximately equal to, or slightly less than, the width of the vehicle seat itself. The rails 2,3 are adapted to slide forwards and backwards along corresponding tracks on the floor of the vehicle (not shown). This sliding allows overall forwards/backwards movement of the vehicle seat.

Left and right support plates 4,5 are respectively attached to, and are located generally above, the left and right rails 2,3. Each of the support plates 4,5 is substantially planar, and disposed so as to be substantially perpendicular to the floor of the vehicle. Each support plate 4,5 is attached to the respective rail 2,3 by means of rigid front and rear link arms 5a,5b,6a,6b. The front support arms 5a,5b are attached to the front ends of the respective rail 2 and support plate 4 by pivotal connections 7. The rear link arms 5b,6b are attached to the rear ends of the respective rail 2,3 and support plate 4,5 by further pivotal connections 7.

Since the link arms 5a,5b,6a,6b are of fixed length, it will be understood that each plate portion 4,5 may move relative to the rail 2,3 to which it is attached along a generally arcuate path.

Front and rear support shafts 8,9 extend between the support plates 4,5 and rigidly connect the support plates 4,5 together. It will be understood that the support plates 4,5 and support shafts 8,9 therefore define a rigid rectangular frame, which may be raised or lowered relative to the rails 2,3 which are attached to the floor of the vehicle.

In use, the underside of the squab portion of the vehicle seat (not shown) will be attached to the support plates 4,5, preferably by connections (not shown) attached to connection points 10 at front and rear ends of the support plates 4,5.

It will be understood that the vehicle seat can therefore be raised or lowered with respect to the vehicle floor. The generally arcuate movement of the seat with respect to the floor, arising from the fixed length of the link arms 5a,5b,6a,6b, confers two advantages. The first is that, if the support plates 4,5 are displaced rearwardly with respect to the rails 2,3 when the seat is in a relatively low position, as the seat is raised the support plates 4,5, and hence the vehicle seat, will move in a forward direction. It is envisaged that, if a driver of the vehicle that is to occupy the seat has relatively short legs, the driver will require both to be raised relative to the vehicle floor, so as to be able to see easily through the windscreen of the vehicle, and also to be brought closer to the vehicle pedals. Conversely, an occupant with relatively long legs will wish to have the seat relatively low down, so as to provide sufficient head room for the occupant, and also wish to be placed a relatively long way away from the pedals.

The second advantage is that, as the support plates 4,5 are raised with respect to the rails 2,3, the support plates 4,5 (and hence the squab of the seat) will remain parallel with the vehicle floor.

It should be understood, however, that the present invention will function equally well with other mechanisms, for instance those that allow the support plates 4,5 to be raised or lowered with respect to the rails 2,3 in a substantially vertical fashion.

A lifting arrangement is provided to raise and lower the support plates 4,5 with respect to the rails 2,3.

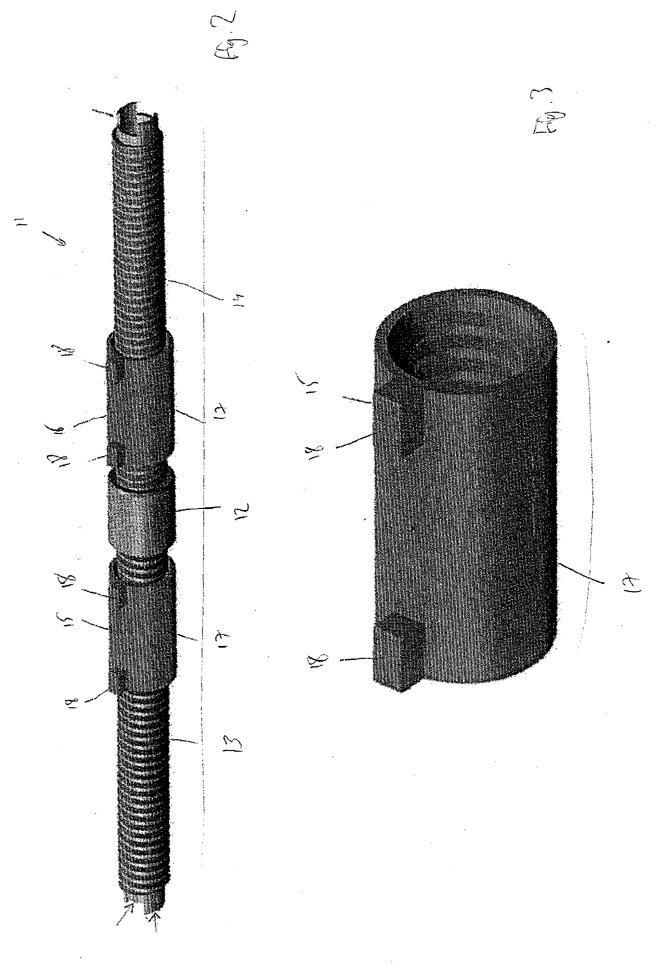

An elongate adjustment bar 11, shown most clearly in figure 2, extends between middle portions of the support plates 4,5. With reference to figure 2, the adjustment bar 11 comprises a middle section 12, which is not threaded. However, first and second threaded portions 13,14 are provided on either side of the middle portion 12, extending almost to the ends of the adjustment bar 11. The first and second threaded portions 13,14 are formed so that the threads thereof are formed in opposite directions to one another.

First and second drive nuts 15,16 are threaded onto the threaded portions 13,14. One of the drive nuts 15 is shown more clearly in figure 3. Each drive nut 15,16 comprises a generally cylindrical, sleeve-shape body 17, having an inner surface which is threaded to allow the drive nut 15,16 to be threaded onto the respective threaded portion 13,14 of the adjustment bar 11. Projecting from one side of the body 17 of the drive nut 15,16 are a pair of upstanding, substantially oblong fixing tabs 18, which are aligned with one another.

Where the adjustment bar 11 reaches the right-hand support plate 5, the adjustment bar 11 is rotatably attached to an inner surface of the support plate 5 by a bearing 19.

Where the adjustment bar 11 meets the left-hand support plate 4, the adjustment bar 11 is attached to a rotatable knob 20, which protrudes outwardly from the left-hand support plate 4 and may be grasped and manually rotated by a user. Rotating the knob 20 clockwise or anticlockwise will therefore transmit corresponding rotational motion to the adjustment bar 11.

A cylindrical guide pipe 21 is mounted around the adjustment bar 11. An elongate slot 22 runs all the way along the length of the guide pipe 21, and is arranged to face generally upwards away from the floor of the vehicle. The fixing tabs 18 of the drive nuts 15,16 are received in the guide slot 22 in a close fit. It will therefore be understood that the drive nuts 15,16 may move longitudinally along the length of the guide pipe 21.

The guide pipe 21 is preferably mounted so that it may not rotate with respect to the support plates 4,5.

A clamping bracket 23 is mounted around the exterior of the guide pipe 21 in the region of each drive nut 15,16. The clamping bracket 23 takes the form of a collar which is slidably mounted on the guide pipe 21, and is attached between the fixing tabs 18 of the respective drive nut 15,16 so that the collar may rotate with respect to the drive nut 15,16.

A connection arm 24 is connected to the bracket 23 that is mounted around the drive nut 16 that is located closest to the left-hand support plate 4. The connection arm 24 comprises a pair of substantially parallel, rigid strips 25, which are roughly parallel with one another. At a first end each strip 25 is joined to an opposing side of the bracket 23 by a pivotal connection 26. At a second end, each strip 25 is connected to a joining member 27 by a further pivotal connection 28. Extending directly away from the joining member 27 is a joining rod 28. At its distal end, the joining rod 28 is rotatably attached to the left-handrail 2 at a pivotal connection 29.

In the arrangement shown in figure 1, only one connection arm 24 is provided. In further embodiments of the invention, however, an arm 24 may be provided on each side of the arrangement.

Adjustment of the height of the vehicle seat using the adjuster 1 will now be described. In an initial position, the support plates 4,5 are positioned relatively close to the respective rails 2,3, and the link arm 5a,5b,6a,6b are provided at a relatively steep angle. In this position, the vehicle seat is relatively close to the floor of the vehicle.

In order to raise the seat, the user grasps the rotational knob 20 and rotates the knob 20. This causes rotation of the adjustment member 11. The drive nuts 15,16 are prevented from rotating with the adjustment member 11, as the left-hand guide nut 15 is connected to a bracket 23, which is in turn connected by the arm 24 to the left-hand rail 2. The drive nuts 15,16 must therefore remain substantially in the same orientation as the adjustment member 11 rotates, and this will drive the guide nuts 15,16 outwardly, as the fixing tabs 18 thereof slide along the slot 22 of the guide pipe 21.

Because the arm 24 has a fixed length, as the left-hand guide nut 16 draws closer to the left-hand support plate 4, the adjustment member 11 will be driven upwardly with respect to the floor of the vehicle, and thus the support plates 4,5, which are attached to the adjustment member 11 will rise upwardly with respect to the vehicle floor. As they do so, they will also travel forwardly with respect to the rails 2,3, as the support plates 4 are constrained to move in an arcuate motion with respect to the rails 2,3 by the fixed length of the link arms 5a,5b,6a,6b.

If, conversely, the user wishes to lower the seat, the user may rotate the rotational handle 20 in the opposite direction, and it will be understood that the effect of this will be to lower the support plates 4,5, which will move in a rearward direction as this occurs.

Instead of the rotation of the adjustment member 11 being carried out manually, it will be appreciated that a motor may also be provided to drive this rotational motion. Operation of the motor may be controlled by a user-operator switch, as will be understood by those skilled in the art.

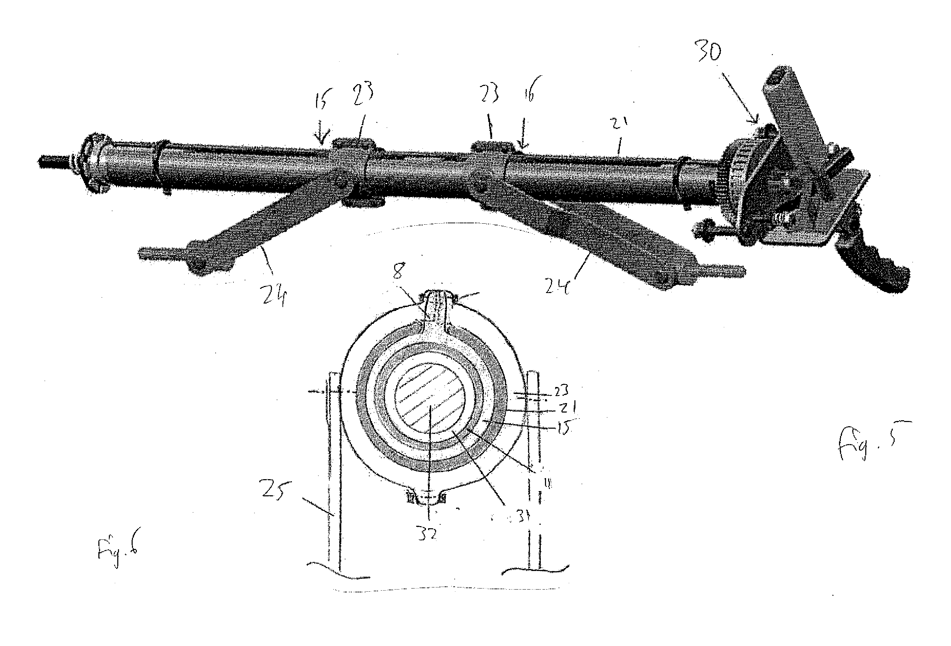

Referring to figure 5, some features of a seat adjuster according to a second embodiment are shown.

In accordance with the second embodiment, the rails 2,3, support plates 4,5, link arms 5a,5b,6a,6b and forward and rear support bars 8,9 are identical to those described above. However, the adjustment mechanism operates in a different manner, as will be described below.

An elongate adjustment member 11 is provided, once again having a middle portion 12 which is not threaded, and counter-threaded portions 13,14 on either side of the middle portion 12. First and second drive nuts 15,16 are threaded onto the adjustment member 11 as described above.

The first and second drive nuts 15,16 are connected, via respective clamping brackets 23 and pivoting arms 24, to the respective rails 2,3. The adjustment member 11 is driven at a first end thereof, corresponding (in the arrangement shown in figure 5) to the right-hand side of the seat. At the far end of the adjustment member 11, a selection arrangement 30 is shown. This will be described in more detail below.

In this embodiment, the adjustment member 11 is hollow, as can be seen in figure 6, which shows a cross-section through the guide pipe 21 and adjustment member 11. Positioned within the adjustment member 11 is a hollow tilt pipe 31, which is rotatable within the adjustment member 11. Within the tilt pipe 31 is a recliner bar 32, which is rotatably mounted with respect both to the adjustment member 11 and the tilt pipe 31. The adjustment member 11, tilt pipe 31 and recliner bar 32 are all laterally slidable with respect to one another.

The tilt pipe 31 and recliner bar 32 are both of constant cross-section, and extend along substantially the whole length of the adjustment member 11.

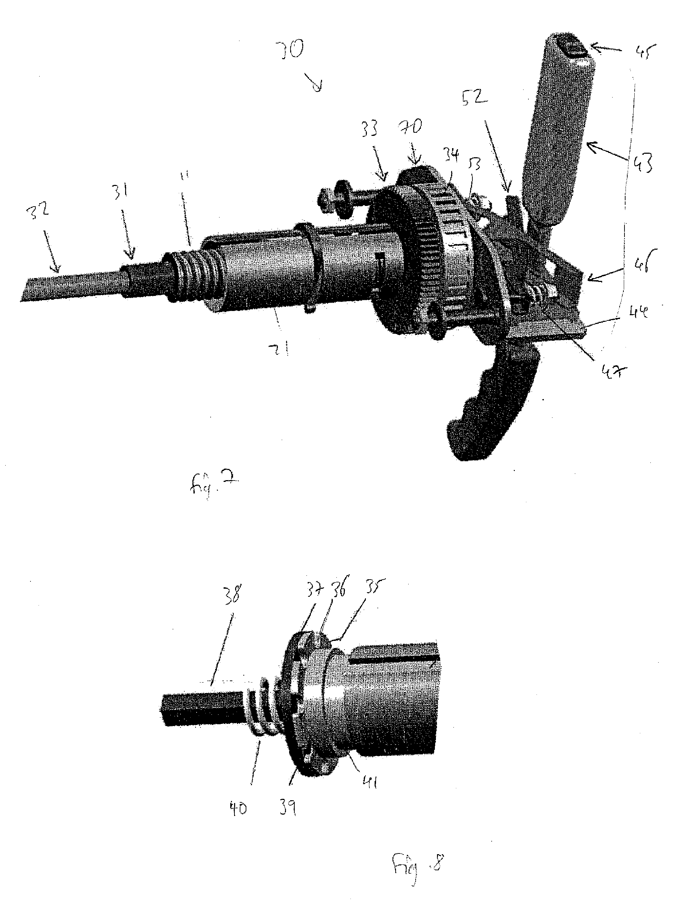

Turning to figure 7, the selection arrangement 30 is shown. The adjustment member 11, the tilt pipe 31 and the recliner bar 32 are all rotationally attached to the left-hand support plate 4. A tilt cog 33 a recliner wheel 34 are positioned adjacent one another, just outside the support plate 4, and are each independently rotatable with respect to the adjustment member 11. Their functions will be described more fully below.

Turning to figure 8, a view is shown of the arrangement at the point where the adjustment member 11 meets the right-hand support plate 5. The adjustment member 11 (which cannot be seen in figure 8) terminates in a height drive connector 35, which is substantially disk-shaped but has a series of notches 36 cut in the periphery thereof. The height drive connector 35 lies against a drive plate 37, which is connected to a drive shaft 38, which in turn may be driven rotationally by a motor (not shown). The drive plate 37 is of approximately the same diameter as the height drive connector 36, and has a series of outer drive connectors 39 in the form of raised studs which project from the surface of the drive plate 37 against which the height drive connector 36 abuts. The arrangement of the outer drive projections 39 is such that they may be received engagingly in the notches 36 which are provided in the height drive connector 35. It will be understood that, in the configuration shown in figure 8, if the drive shaft 38 is driven rotationally, the drive plate 37 will rotate, and this rotation will be transmitted to the height drive connector 35. This will cause the adjustment member 11 to rotate, allowing the seat to be raised or lowered, as described above, depending on the direction in which the drive shaft 38 rotates.

The drive plate 37 is biaised into contact with the height drive connector 35 by a drive spring 40, which is provided between the drive plate 37 and another fixed component, for instance the right-hand support plate 5.

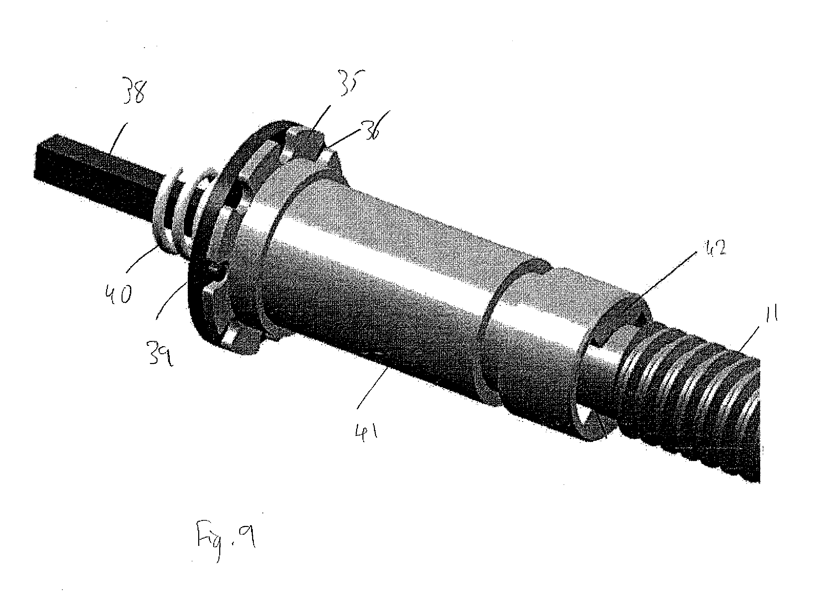

The height drive connector 35 may be formed integrally with the adjustment member 11 or, as shown in figure 9, may form part of a collar 41 which grips to an exterior surface of the adjustment member 11 by opposing gripping teeth 42. In the embodiments shown in figures 8 and 9, the collar 41 lies outside the adjustment member 11, but inside the guide pipe 21.

In the position of the adjustment member 30 shown in figure 7, the height of the seat may be adjusted. The adjustment arrangement 30 is provided with a handle 43, which is mounted on a plate 44 outboard of the left-hand support plate 4, and may be moved forward or backward with respect to the adjustment element 11. A drive switch 45 is provided on an upper surface of the switch 43, may be moved between a central neutral position, in which the motor is inactive, and forward and backward drive positions, in which the motor is driven to rotate in either the forward or backwards direction.

The switch 43 may be used to select whether the seat is to be raised or lowered, whether the reclining angle of the back-rest is to be adjusted, or whether the tilt of the seat squab is to be altered. The manner in which this is achieved is described below.

If a user wishes to change the angle at which the back-rest of the seat is reclined, the user may push the switch 43 forwardly with respect to the left-hand support plate 4.

A recliner lever 46 is hingedly attached to an exterior surface of a control plate 70, which is generally parallel to the left-hand support plate 4 and mounted outboard of the recliner wheel 34 and tilt cog 33. The recliner lever 46 projects diagonally outwardly, so as to project past the switch 43. The recliner lever 46 may pivot with respect to the control plate 70, but is biaised by a return spring 53 towards a position in which the recliner lever 46 projects outwardly away from the control plate 70.

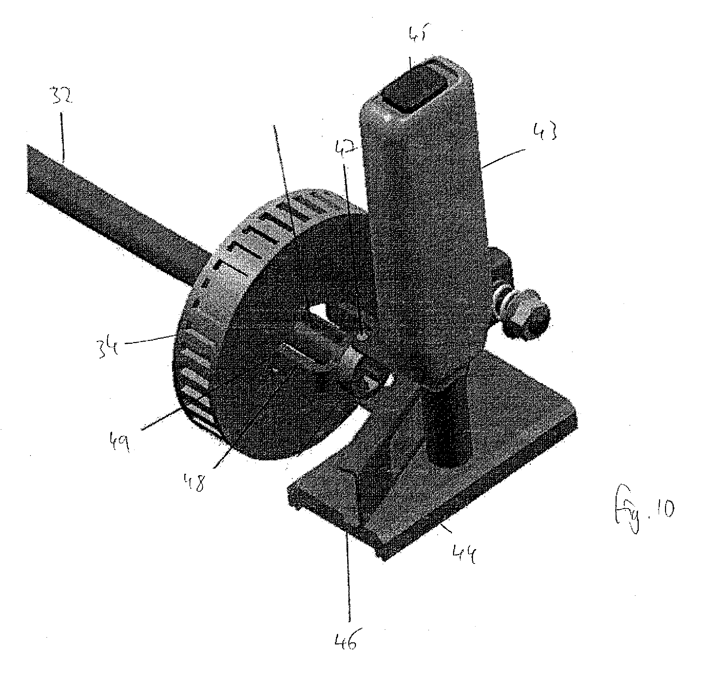

With reference to figure 10, selected components of the selection arrangement 30 are shown.

When the switch 43 is moved in a forward direction, the switch 43 presses against the recliner lever 46, and presses the recliner lever 46 inwardly towards the control plate 70 (not shown in figure 10). At a middle portion thereof, the recliner lever 46 is attached to the recliner bar 32 by a pivotal connection 47, so that pushing the recliner lever 46 inwardly towards the control plate 70 has the effect of pushing the recliner bar inwardly towards the right-hand support plate 5.

Where the recliner bar 32 meets the recliner lever 46, a pair of short L-shaped engagement elements 48 protrude outwardly from the axis of the recliner bar 32, and then project parallel with the axis of the recliner bar 32, back towards the right-hand support plate 5. Engagement apertures 49, which are shaped and positioned to receive the engagement elements 48, are formed in the surface of the recliner wheel 34 that is closest to the control plate 70. The engagement elements 48 are received in the engagement apertures 49, so that the recliner wheel 36 is rotationally connected to the recliner bar 32.

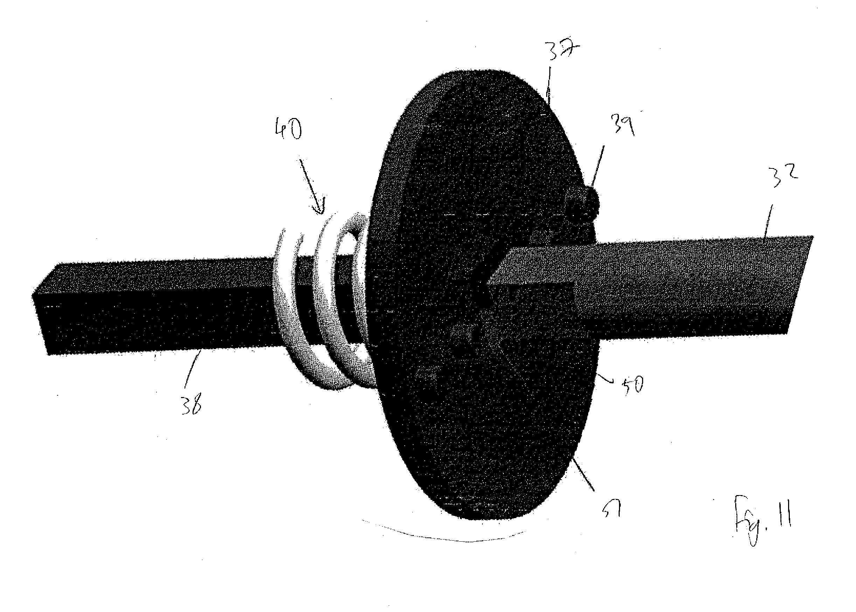

Referring to figure 11, a view is shown of the end of the recliner bar 32 that lies closest to the drive plate 37. For the purposes of clarity, the tilt pipe 31, adjustment element 11 and guide pipe 21 have been omitted from this figure.

The end of the recliner bar 32 terminates in an engagement portion 50, which has a substantially square cross-section. The engagement portion 50 is aligned with a substantially square aperture 51 which is provided in the centre of the drive plate 37. When the switch 43 is in the neutral position shown in figure 7, the engagement portion 50 falls short of the square aperture 51, and so rotation of the drive plate 37 does not result in rotation of the recliner bar 32.

However, when the recliner lever 46 is pushed inwardly by the switch 43, this drives the recliner bar 32 towards the drive plate 37, and drives the engagement portion 50 of the recliner bar 32 into the square aperture 51.

If the switch 43 is moved so as to push the recliner lever 46 fully inwards, the tip of the engagement portion 50 will make contact with a rear surface (not shown) of the square aperture 51, and will then push the drive plate 37 backwards against the drive spring 40. This will displace the drive plate 37 sufficiently for the outer engagement projections 39 to be moved out of engagement with the slots 36 provided in the height drive connector 35.

It will be appreciated that, in this state, rotation of the drive shaft 38 will impart rotation to the recliner bar 32, but will not impart rotation to the height drive connector 35. The adjustment member 11 will therefore not rotate, and the height of the seat will not change if the drive shaft 38 is rotated.

Returning to figure 10, if the recliner lever 46 is depressed fully, the engagement elements 48 of the recliner bar 42 will slide through the drive apertures 49 provided in the recliner wheel 34, remaining in engagement therewith. The recliner wheel 34 is attached to a standard recliner mechanism by means of a drive band (not shown), and rotational movement of the recliner wheel 34 may therefore adjust the reclining angle of the back-rest of the seat in a conventional manner.

Moving the switch 43 forwardly to a "recliner" position therefore disengages the drive shaft 38 from the adjustment element 11, and engages the drive shaft 38 with the recliner bar 32, allowing the motor to be used to increase or decrease the reclining angle of the back-rest of the seat.

As described above, provided between the adjustment member 11 and the recliner bar 32 is a hollow tilt pipe 31. Referring to figure 7, a tilt lever 52 is also provided on the outer surface of the control plate 70. The tilt lever 52 is hingedly attached to the control plate 70 and projects outwardly away from the control plate 70 in a similar fashion to the recliner lever 46.

The tilt lever 52 is biased into its outward position by a return spring 47, but when the switch 43 is moved in a rearward direction the tilt lever 52 may be depressed inwardly towards the control plate 70.

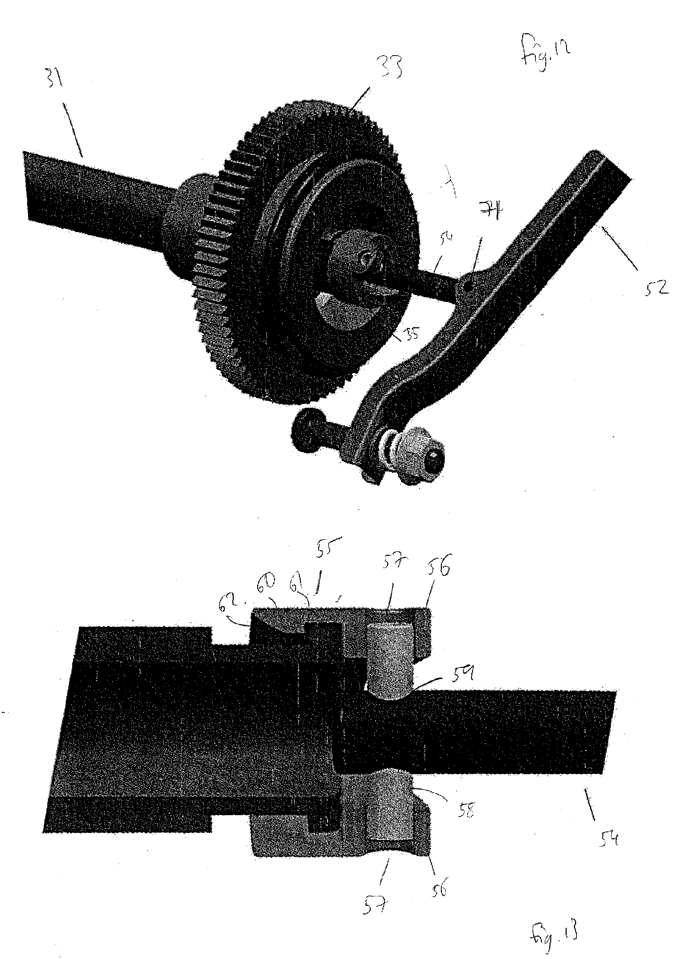

Turning to figure 12, it can be seen that, at a central portion thereof, the tilt lever 52 is connected to a push rod 54, by a pivotal connection 51. The push rod 54 projects directly inwardly towards the control plate 70, and at its far end is connected, via a bearing 55, to the end of the tilt pipe 31. This can be seen more clearly in the cross-sectional view shown in figure 13. The bearing 55 takes the form of a generally cylindrical collar. At a first end thereof, two opposing ears 56 project forwardly, generally parallel to the axis of the cylinder, and each of these ears 56 has an aperture 57 formed therethrough. The apertures 57 are aligned with one another.

To attach the push rod 54 to the bearing 55, the end of the push rod 55 is inserted into the bearing 55, until a bore 59 that is formed through the push rod 54 is aligned with the apertures 57 formed through the ears 56 of the bearing 55. A push pin 58 is then pushed through one of the apertures 57 in the bearing 55, and through the aperture 59 formed in the push rod 54, until it projects into the aperture 57 formed in the ear 56 at the opposing side of the bearing 55. The push pin 58 is received in the aperture 59 in the push rod 54 in a tight interference fit, and the push rod 54 is therefore axially and rotationally connected to the bearing 55.

At the other end of the bearing 55, a retention lip 60 runs around the inner surface of the cylindrical body thereof and projects inwardly into the hollow interior of the bearing 55. An inner wall 61 of this retention lip 60, which faces towards the centre of the bearing 55, is substantially perpendicular to the central axis of the bearing 55, whereas an outer wall 62 thereof is chamfered.

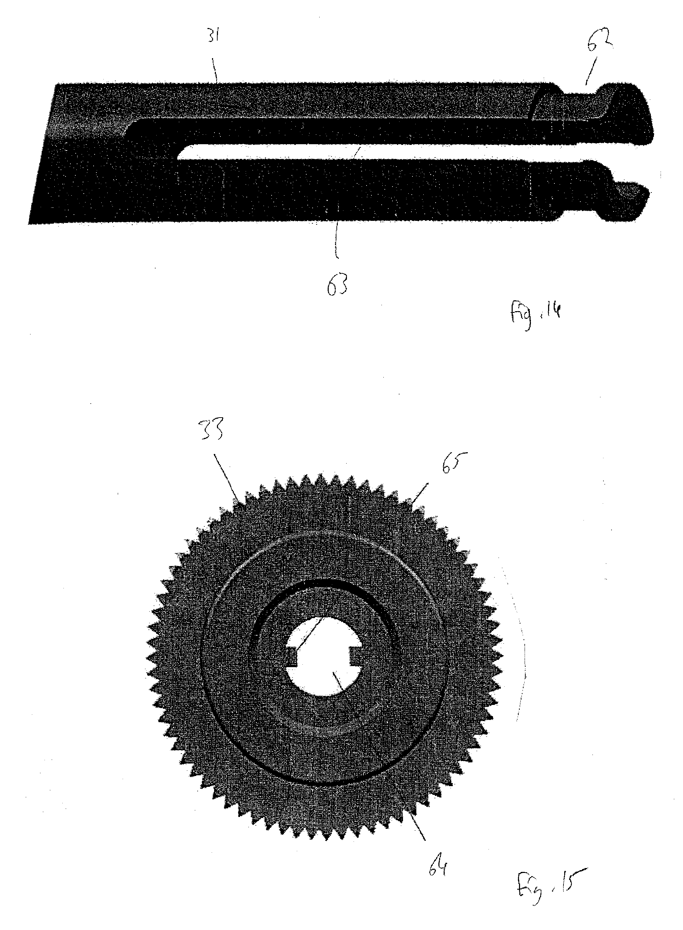

Turning to figure 14, the end of the tilt pipe 31 is shown that connects to the selection arrangement 30. The tilt pipe has an annular groove 62 that runs around the circumference of the tilt pipe 31, a short distance from the end thereof. At its end, the tilt pipe 31 also has a split formed therein, which is perpendicular to, and intersects, the longitudinal axis 63 of the tilt pipe 31. Thus, at its end, the tilt pipe 31 is effectively split into two symmetrical, opposing halves.

Turning to figure 13, the end of the tilt pipe 31 is fitted into the bearing 55 by pressing the end of the tilt pipe 31 against the chamfered surface 62 of the retention lip 60. As a result of the split 63 formed in the tilt pipe 31, the two halves of the tilt pipe 31 may deflect inwardly towards one another as they press against the chamfered walls 62. The end of the tilt pipe 31 may then be pushed past the retention wall 60, until the relatively wide portion of the tilt pipe 31 lies inside the main body of the bearing 55 and the two halves of the tilt pipe 31 may spring outwardly. At this point, the retention lip 60 lies in the annular groove 62 formed near the end of the tilt pipe 31. The relatively wide portion of the tilt pipe 31 cannot, however, be pulled back past the inner wall 61 of the retention lip 60, and the tilt pipe 31 is therefore constrained to move axially with the bearing 55. The tilt pipe 31 is, however, rotatable with respect to the bearing 55.

The tilt cog 33 is mounted on the tilt pipe 31. With reference to figure 15, it can be seen that the tilt cog 33 has a generally round central aperture 64, and that a pair of opposing axial tabs 65 project into the central aperture 64. The tilt cog 33 is threaded onto the end of the tilt pipe 31, so that the axial tabs 65 are received in the gaps between the two halves 63 thereof. The tilt cog 33 therefore is, therefore, constrained to rotate with the tilt pipe 31.

When the tilt lever 52 is depressed inwardly by the switch 43, it will be understood that the tilt pipe 31 is, through the push rod 54 and bearing 55, driven towards the right-hand support plate 5.

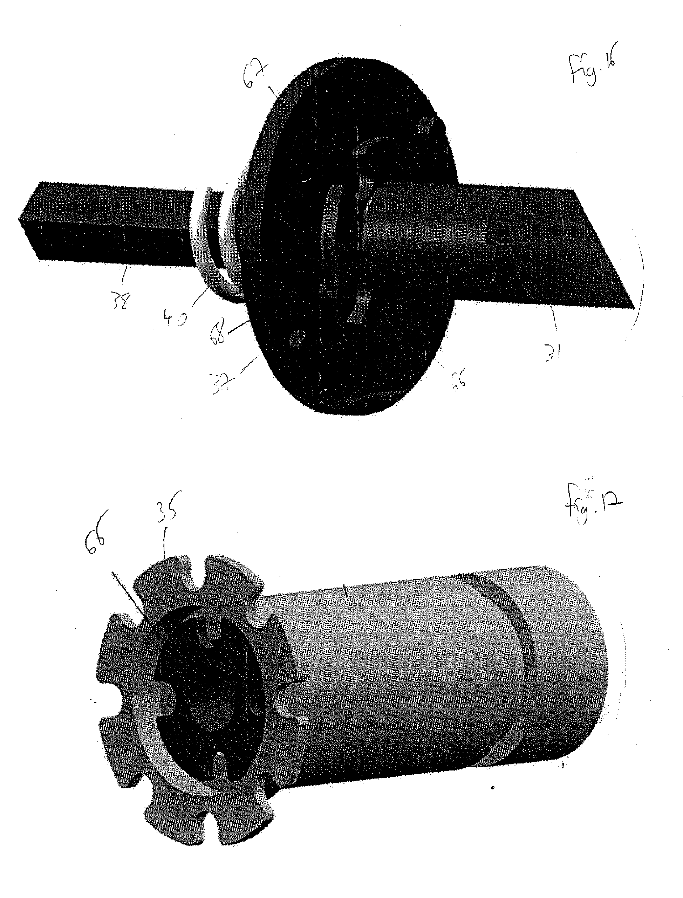

Turning to figure 16, the far end of the tilt pipe 31 is shown. The tilt pipe 31 terminates in a tilt drive connector 66, which is substantially disk-shaped, and is of greater diameter than the tilt pipe 31 itself, but of lesser diameter than the drive plate 35. Formed in the outer circumference of the tilt drive connector 66 are a series of spaced apart notches 67.

As can be seen in figure 16, the inner face of the drive plate 37 is formed with inner drive connectors 68, in the form of outwardly-projecting studs which are positioned and dimensioned so that they may be engagingly received in the slot 57 formed in the periphery of the self-drive connector 66.

Before the tilt lever 52 is activated, the tilt drive connector 66 is spaced apart from the drive plate 37, and therefore when the drive shaft 38 rotates the tilt pipe 31 is not affected by this rotation.

However, when the tilt lever 52 is pushed inwardly, the tilt pipe 31 is driven towards the drive plate 37, and the tilt drive connector 67 presses against the drive plate 37, so that the inner drive connectors 68 are received in, and engage, the slot 67 formed in the periphery of the tilt drive connector 66.

As the tilt pipe 31 is driven further towards the right-hand support plate 5, the drive plate 37 is pushed backwards against the bias of the drive spring 40, thus disengaging the drive plate 37 from the height drive connector 35.

Subsequent rotation of the drive shaft 38 by the motor will cause rotation of the tilt pipe 31, but will not cause the adjustment member 11 (or, indeed, the recliner bar 32) to rotate. In this configuration, therefore, the tilt cog 33 will be driven rotationally by the motor.

Turning to figure 17, it can be seen that the tilt drive connector 66 lies within the height drive connector 35.

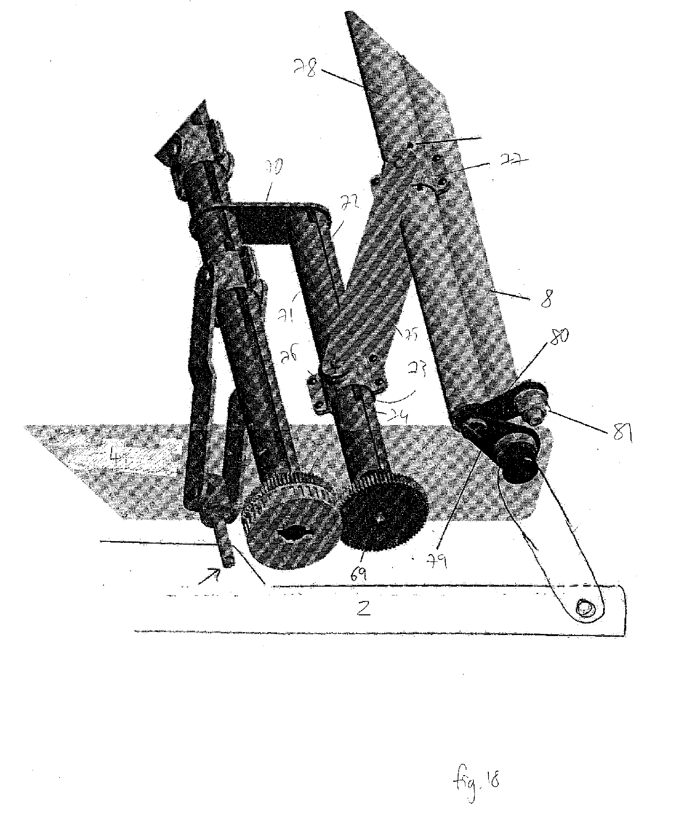

Rotation of the tilt cog 33 allows the seat to be tilted. One method of achieving this is shown in figure 18. The tilt cog 33 drives an adjustment cog 69, which is mounted beside the tilt cog 33. Rotation of the adjustment cog 69 drives rotational motion of a threaded tilt adjustment member (not shown), which is mounted between the adjustment cog 69 and a support arm 70. The support arm 70 is mounted on the guide pipe 21 which is positioned around the adjustment member 11. The tilt adjustment member therefore lies parallel with the adjustment member 11.

A tilt guide pipe 71 is provided around the tilt adjustment member, and has a guide slot 72 running along its length. A tilt drive nut 73 is rotationally mounted on the tilt adjustment member, but has tabs 74 which project therefrom and are constrained to move along the tilt guide slot 72, in the same manner as described above with respect to the drive nuts 15,16 which are mounted on the adjustment member 11.

A connection arm 75 is mounted on a bracket 76 which is connected to the tab 74 of the tilt drive nut 73. The far end of the connection arm 75 is connected to a further bracket 77 that is clamped around a tilt shaft 78, which is mounted parallel to the front shaft 80, and connected thereto by a pair of first tilt link arms 79. The further bracket 77 may not move axially with respect to the tilt shaft 78. The first tilt shaft 78 is connected, by a pair of second tilt link arms 80, to the underside of the seat frame by appropriate connections 81, such as nuts and bolts.

When the tilt cog 32 rotates, rotational motion is transmitted to the adjustment cog 69, which in turn rotates the tilt adjustment member, and causes the tilt drive nut 73 to be driven along the tilt adjustment member. Because of the fixed length of the tilt connection arm 75, the tilt shaft 78 is either driven away from, or pulled towards, the tilt adjustment member. Through motion of the first and second tilt arms 79,80, therefore, the front side of the seat will be raised or lowered, while the rear end of the seat remains fixed. This will affect the angle of tilt of the seat, irrespective of the height at which the seat is placed.

It will therefore be understood that, by moving the switch 43 between height adjustment, tilt adjustment and recliner positions, the same motor control may be used to control three different functions of the vehicle seat.

It will be appreciated that the invention is not limited to these three specific functions, and that mechanisms as described herein may be used to select between any number of different functions, relating to a vehicle seat or to its surrounds, that can be adjusted by means of a rotating shaft, pipe or bar.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An adjustment arrangement for adjusting the position of a vehicle seat, comprising:
a fixed element, which is fixed in position relative to the floor of the vehicle;
a moveable element for connection to the underside of the vehicle seat, the moveable element being connected to the fixed element such that the distance of the moveable element from the fixed element may vary;
a threaded shaft attached to one of the moveable element and the fixed element, extending away therefrom;
a nut threaded onto the threaded shaft;
a connecting arm having a substantially fixed length, connected at one end to the nut, and at the other end to the other one of the fixed element and the moveable element; and
the arrangement being such that relation rotation of the nut and shaft causes the nut to travel along the shaft towards or away from the one of the moveable element and the fixed element, thus causing the moveable element to be driven away from or towards the fixed element, and adjusting the height of the seat above the floor of the vehicle.

2. An arrangement according to claim 1, wherein the threaded shaft is attached to the moveable element.

3. An arrangement according to claims 1 or 2, wherein the threaded shaft is attached to the moveable element or to the fixed element at substantially right-angles thereto.

4. An arrangement according to any preceding claim, wherein the moveable element is attached to the fixed element by means of a pair of link arms, each of which is pivotally attached both to the moveable element and to the fixed element, such that the moveable element may move along a substantially arcuate path with respect to the fixed element.

5. An arrangement according to any one of claims 1 to 3, wherein the moveable element may move substantially directly away from or towards the fixed element.

6. An arrangement according to any preceding claim, wherein the nut has at least one fixing tab extending away from an outer surface thereof, and wherein a guide pipe is positioned around the threaded shaft, the guide pipe having an elongate slot formed therein to receive the fixing tab, such that the fixing tab may move along the threaded shaft but may not rotate with respect to the guide pipe.

7. An arrangement according to any preceding claim, wherein the connecting arm is pivotally attached to the nut.

8. An arrangement according to claim 7, wherein the connecting arm is pivotally attached to the nut by way of a bracket which is attached to the nut and which extends substantially around the threaded shaft.

9. An arrangement according to any preceding claim, wherein the connecting arm is pivotally attached to the other one of the fixed element and the moveable element.

10. An arrangement according to any preceding claim, wherein a pair of fixed elements are provided in spaced apart relation, with a corresponding pair of moveable elements being provided, and wherein the threaded shaft extends between the pair of moveable element or between the pair of fixed elements.

11. An arrangement according to claim 10, wherein the threaded shaft comprises two threaded portions, one on either side thereof, the threaded portions being threaded in opposite directions to one another, with one nut being threaded onto each of the threaded portions, and a corresponding connecting arm being provided between each nut and the corresponding other one of the moveable element and fixed element.

12. An arrangement according to any preceding claim, wherein a manual control is provided to allow a user to impart rotational motion to the threaded shaft.

13. An arrangement according to any preceding claim, wherein a motor is provided to impart rotational motion to the threaded shaft.

14. An arrangement according to any preceding claim, wherein:
a further pipe or shaft is provided substantially coaxially with the threaded shaft;
a drive connector is attached to a drive shaft which may be driven rotationally; and
a selection arrangement is provided to allow a user to drive one of the threaded shaft and the further shaft or pipe, selectively, into engagement with the drive connector, so that rotational movement of the drive shaft will impart rotational motions only to the selected one of the threaded shaft and the further shaft or pipe.

15. An arrangement according to claim 14, wherein the selection arrangement is provided at or near the far end of the threaded shaft from the end which may engage the drive connector.

16. An arrangement according to claim 14 or 15, wherein the further shaft or pipe is provided within the threaded shaft.

17. An arrangement according to claim 14 or 15, wherein the further shaft or pipe is provided around the threaded shaft.

18. An arrangement according to any one of claims 14 to 17, wherein the drive connector comprises a first connection face having a first connection arrangement on a connection surface thereof, and wherein at least one of the threaded shaft or the further shaft or pipe is provided with a corresponding second connection face having a second connection arrangement thereon to engage with the first connection arrangement and thus transmit rotational motion between the drive connector and the threaded shaft or the further shaft or pipe.

19. An arrangement according to claim 18, wherein one of the first and second connection arrangements comprises one or more projections, and the other of the first and second connection arrangements comprises one or more recesses or notches.

20. An arrangement according to any one of claims 14 to 19, wherein one of the threaded shaft and the further shaft or pipe is biased into connection with the drive connector in a default mode, and wherein the other one of the threaded shaft and the further pipe or shaft may be driven towards the drive connector and engage with the drive connector, thus deflecting the drive connector away from its default position, such that the drive connector is moved out of engagement with the one of the threaded shaft or the further shaft or pipe.

21. An arrangement according to claim 20, wherein the drive connector is biased into the default position.

22. An arrangement according to any one of claims 14 to 21, wherein a third shaft or pipe is provided substantially coaxially with the threaded shaft.

23. An arrangement for adjusting two or more properties of a vehicle seat, comprising:
first and second shafts or pipes provided substantially coaxially with one another;
a drive connector, connected to a drive shaft which is adapted to be driven rotationally; and
a selection arrangement allowing one of the first or second shafts or pipes, selectively, to engage the drive connector, so that rotation of the drive shaft causes corresponding rotation of the one of the first and second shafts or pipes, wherein rotation of the first shaft or pipe adjusts a first property of the vehicle seat, and wherein rotation of the second shaft or pipe adjusts a second property of the vehicle seat.
